# EUROPÄISCHE PATENTANMELDUNG

(11) **EP 4 042 916 A1**
(43) Veröffentlichungstag der Anmeldung: **17.08.2022**
(21) Anmeldenummer: 21156781.3
(22) Anmeldetag: 12.02.2021
(51) Int. Cl.: A47J 47/02

(54) **PORTABLE LUNCHBOX**

(71) Anmelder: Nexenic AG, 8406 Winterthur (CH)
(72) Erfinder: RIBEIRO RUIZ, Claudio, 7205 Zizers (CH); MUHL, Reto, 8236 Büttenhardt (CH); HOFER, Johannes Matthäus Maria, 8561 Ottoberg (CH)
(74) Vertreter: Clerc, Natalia

(57) **Zusammenfassung**

Eine Lunchbox weist ein Basisteil (2) mit einer Nahrungsmittels-Kavität (40) zur Aufnahme von Nahrungsmitteln, einen das Basisteil (2) dicht verschliessenden Deckel (1) und einen Verschluss (3) zum Verschliessen der Lunchbox mittels Fixierung des Deckels (1) auf dem Basisteil (2) auf. Der Verschluss (3) umfasst mindestens einen Schliesselement (30, 31), das bezüglich des Basisteils (2) und des Deckels (1) aus einer Verschlussposition in eine Öffnungsposition verschiebbar ist. Es ist mindestens ein Anhebungselement Bügel (30, 31) vorhanden, das in einer bezüglich der Verschlussposition verschobenen Position des Schliesselements den Deckel (1) vom Basisteil (2) anhebt. Vorzugsweise ist das mindestens eine Schliesselement und das Anhebungselement ein einziges Bauteil, das durch einen Bügel gebildet ist. Diese Lunchbox ist zum Transport, zur Aufbewahrung und zum Zubereiten von Speisen durch wahlweises Erhitzen und Steamen der Nahrungsmittel geeignet. Siue ermöglicht ein sicheres Öffnen des Deckels ohne Verbrühungsgefahr für den Benützer und gewährleistet zudem eine optimale Dichtung.

## Beschreibung

### TECHNISCHES GEBIET

Die vorliegende Erfindung betrifft eine Lunchbox, insbesondere eine portable Lunchbox und insbesondere zum Aufbewahren, Transportieren und Zubereiten von Nahrungsmitteln.

### STAND DER TECHNIK

Lunchboxen ermöglichen es, Speisen eigener Wahl an den Arbeits- oder Ausbildungsplatz oder an einen anderen beliebigen Ort mitzunehmen und dort in der gewünschten Form zu verzehren. Es gibt Lunchboxen, die lediglich eine dichte Verpackung für die Aufbewahrung gewährleisten. Andere Typen von Lunchboxen sind isolierend ausgebildet, so dass die Speisen warm oder kühl gehalten werden können. Ferner sind Lunchboxen bekannt, welche eine integrierte Heizvorrichtung aufweisen, um die Speisen vor Ort zu erwärmen. Weiterentwickelte Lunchboxen ermöglichen auch ein Steamen von Speisen.

WO 2020/064848 offenbart eine derartige weiterentwickelte portable Lunchbox zum Aufbewahren, Transportieren und Zubereiten von Nahrungsmitteln. Sie weist eine Nahrungsmittel-Kavität zur Aufnahme von Nahrungsmitteln auf, eine Heiz-Kavität zur Aufnahme von Wasser, ein Heizelement zur Erwärmung des Wassers sowie eine mechanische Schaltvorrichtung, welche von einem ersten Zustand in einen zweiten Zustand geschaltet werden kann. Im ersten Schaltzustand lässt sich das Nahrungsmittel erwärmen, im zweiten Schaltzustand lässt es sich steamen, also mit Dampf beaufschlagen. Diese Lunchbox weist ein Basisteil auf, in der eine Schale mit dem Nahrungsmittel eingesetzt werden kann, sowie einen Deckel, welcher das Basisteil mit der eingelegten Schale dicht verschliesst. Zur dichten Verriegelung der Box sind schwenkbare Laschen, insbesondere Klappen, vorhanden. Da sie am Deckel angeordnet sind, dienen sie gleichzeitig zur manuellen Anhebung und Entfernung des Deckels vom Basisteil.

WO 2015/177726 A1 beschreibt eine Lunchbox zum Aufbewahren, zum Transport und zum Erwärmen von Lebensmitteln mit einem Druckausgleichselement in der Oberseite des Deckels der Box.

WO 2015/096175 A1 zeigt eine Lunchbox zum Aufbewahren, zum Transport und zum Erwärmen von Lebensmitteln mit einem Überdruckventil, das in einer Seitenwand des Basisteils angeordnet ist.

EP 1 780 140 B1 offenbart einen Behälter zum Aufbewahren und zum Transport von Lebensmitteln mit einem Basisteil und einem dicht schliessenden Deckel. Die Verriegelung des Deckels erfolgt mittels zwei bügelförmigen Schiebern. Die zwei Schieber sind an zwei gegenüberliegenden Seiten an einem umlaufenden Rand des Deckels gehalten. Sie umgreifen einen umlaufenden Rand des Basisteils und sind bezüglich Deckel und Basisteil zueinander verschiebbar, wodurch der Deckel auf dem Basisteil fixiert wird.

EP 1 541 485 A1 zeigt einen Behälter, insbesondere zur Aufbewahrung von Butter oder Käse, mit einer Grundplatte und einer Abdeckhabe. Die Abdeckhaube weist einen umlaufenden unteren Rand auf. An der Grundplatte ist eine Wippe mit einem Riegelelement und zwei Hebelarmen angeformt. Durch Pressen auf das Riegelelement nach unten werden Enden der Hebelarme nach oben gedrückt und die Abdeckhaube wird angehoben. Dabei wird das Riegelelement nach aussen gedrückt und die Abdeckhaube wird freigegeben.

DE 94 08 536 U1 offenbart einen Dampfkochtopf mit einer Druckentlastungsöffnung, die in einem Deckelgriff angeordnet ist und die mittels eines verschiebbaren Plättchens einstellbar ist.

Eine luftdicht verschlossene Lunchbox, welche heisse Lebensmittel beinhaltet, ist nicht immer einfach zu öffnen, insbesondere dann, wenn die Lebensmittel im Innern der Lunchbox selber erhitzt worden sind. Beim Öffnen dringt als erstes Dampf aus der Lunchbox, welche bestenfalls eine Brille des Benutzers beschlägt und schlimmstenfalls seine Finger oder andere Körperteile verbrüht. Ferner herrscht meistens ein Überdruck im Innern der Lunchbox, so dass beim Öffnen auch Flüssigkeit, insbesondere Fett, herausspritzen und den Benutzer oder jemanden in seiner Nähe ebenfalls verbrühen kann. Zudem ist es nicht erwünscht, wenn Dampf oder herausspritzende Flüssigkeit eine Tischoberfläche oder der Lunchbox benachbarte Gegenstände verschmutzt.

Ferner muss die Dichtheit der Lunchbox beim Aufbewahren, beim Transport und beim Zubereiten der Speisen stets gewährleistet sein.

### DARSTELLUNG DER ERFINDUNG

Es ist deshalb eine Aufgabe der Erfindung, eine Lunchbox zu schaffen, welche sich zuverlässig dicht verschliessen lässt und welche sich auf sichere Art und Weise und mit geringem Kraftaufwand öffnen lässt.

Diese Aufgabe löst eine Lunchbox mit den Merkmalen des Anspruchs 1.

Es ist eine weitere Aufgabe der Erfindung, eine Lunchbox zu schaffen, die sich aus einem dicht verschlossenen Zustand auf sichere Art und Weise öffnen lässt.

Diese Aufgabe löst eine Lunchbox mit den Merkmalen des Anspruchs 15.

Die erfindungsgemässe Lunchbox weist in einer ersten Variante der Lösung ein Basisteil mit einer Nahrungsmittels-Kavität zur Aufnahme von Nahrungsmitteln auf, einen das Basisteil dicht verschliessenden Deckel und einen Verschluss zum Verschliessen der Lunchbox mittels Fixierung des Deckels auf dem Basisteil. Der Verschluss weist mindestens ein Schliesselement auf, das bezüglich des Basisteils und des Deckels aus einer Verschlussposition in eine Öffnungsposition verschiebbar ist. Es ist mindestens ein Anhebungselement vorhanden, welches in einer bezüglich der Verschlussposition verschobenen Position des Schliesselements den Deckel vom Basisteil anhebt.

Dank des Schliesselements lässt sich der Deckel dichtend auf dem Behälter fixieren. Das Schliesselement lässt sich vorzugsweise so ausbilden, dass es einen Anpressdruck ausübt, beispielsweise indem es den Deckel nach unten gegen das Basisteil drückt. Es lässt sich beispielsweise als mindestens einen Bügel oder als mindestens ein Klappelement ausbilden.

Dank der Anhebungselements lässt sich der Deckel anheben, so dass er auf einfache Weise von Hand ergriffen und die Lunchbox vollständig geöffnet werden kann. Dieses Anheben erfolgt je nach Ausführungsform bereits bei teilweise geöffnetem Verschluss oder erst bei vollständig geöffnetem Verschluss. Je nach Ausführungsform erfolgt das Anheben selbsttätig, beispielsweise indem das Anhebungselement durch sein Eigengewicht geschwenkt wird und so den Deckel anhebt. Vorzugsweise wird das Anhebungselement jedoch von Hand nach oben oder nach unten gedrückt, um den Deckel anzuheben.

In bevorzugten Ausführungsformen dient das Schliesselement oder das Anhebungselement als Haltegriff zum weiteren Anheben und Entfernen des Deckels. Ist das Schliess- oder das Anhebungselement mindestens ein Bügel, so hat dies den Vorteil, dass die Hände einen vergrösserten Abstand zum Restdampf und heissem Kondenswasser haben. Sind die Schliesselementen, insbesondere die Bügel, am Deckel angeordnet, so lassen sie sich in bevorzugten Ausführungsformen als Handgriffe zum Anheben und Entfernen des Deckels verwenden.

In bevorzugten Ausführungsformen ist das Schliesselement und das Anhebungselement möglichst fluchtend mit der Aussenkontur der restlichen Lunchbox ausgebildet. Die Lunchbox weist vorzugsweise keine oder kaum vorstehende Bauteile auf. Dadurch lässt sie sich einfach in einer Tasche oder Rucksack verstauen und transportieren. Zudem weist die Lunchbox dadurch ein ansprechendes Design auf.

Vorzugsweise ist das Schliesselement und das Anhebungselement durch dasselbe Bauteil gebildet. In bevorzugten _Ausführungsformen ist dieses gemeinsame einzige Bauteil ein Bügel. Vorzugsweise sind zwei Bügel vorhanden, die jedes für sich ein Schliesselement und ein Anhebungselement bilden.

In einer bevorzugten Ausführungsform umfasst das mindestens eine Schliesselement einen Bügel mit zwei Armen und einem die zwei Arme verbindenden Steg. Der Bügel ist in Längsrichtung der Arme bezüglich des Basisteils und des Deckels aus der Verschlussposition in die Öffnungsposition verschiebbar ist. Das mindestens eine Anhebungselement ist zudem der Bügel, wobei der Bügel in der bezüglich der Verschlussposition verschobenen Position schwenkbar ist. Eine Schwenkung des Bügels bezüglich des Basisteils und des Deckels hebt den Deckel vom Basisteil an.

Je nach Ausführungsform wird durch das Anheben des Deckels lediglich eine Öffnung zwischen Innenraum der Lunchbox und Umgebung freigegeben. In anderen Ausführungsformen wird ein Spalt zwischen Basisteil und Deckel erzeugt. In bevorzugten Ausführungsformen hebt der vom Basisteil angehobene Deckel zumindest die Dichtung zwischen Deckel und Basisteil mindestens teilweise auf, so dass ein weiteres Anheben des Deckels von Hand erleichtert wird.

Wird der Deckel bereits bei teilweise geöffnetem Verschluss angehoben, lässt sich die Lunchbox noch nicht vollständig öffnen, z. B. lässt sich der Deckel noch nicht vollständig vom Basisteil anheben und entfernen. Dies hat den Vorteil, dass eine allfällig erzeugte Öffnung definiert klein gehalten werden kann. Ein Überdruck im Behälter und/oder Dampf kann bis zur vollständigen Öffnung des Behälters kontrolliert entweichen, ohne dass sich der Benützer verbrüht. Der Dampf entweicht je nach Ausführungsform ausschliesslich durch die aufgehobene Dichtung zwischen Basisteil und Deckel oder in anderen Ausführungsformen ausschliesslich über eine Luftentlastungsöffnung und/oder ein Überdruckventil. Weitere Ausführungsformen sind Kombinationen dieser zwei Ausführungsformen, so dass der Dampf über verschiedene Öffnungen entweicht.

Wird der Deckel erst bei vollständig geöffnetem Verschluss angehoben, so ist eine klar erkennbare Position erreicht. Der Benützer kann nach wie vor warten, bis genügend Dampf entwichen ist. Befinden sich im Behälter jedoch nicht erhitzte Nahrungsmittel und ist kein Überdruck oder Dampf vorhanden, so muss der Benützer nicht unnötig warten, sondern kann den Deckel sehr schnell entfernen. Dank der Anhebung des Deckels mittels des Verschlusses lässt sich der Deckel anschliessend mit geringem Kraftaufwand vom Basisteil entfernen.

In bevorzugten Ausführungsformen weist die Lunchbox mindestens eine Luftdurchgangsöffnung auf, die von einem Innenraum des Basisteils nach aussen führt, wobei das mindestens eine Schliesselement in der Verschlussposition die mindestens eine Luftdurchgangsöffnung dicht verschliesst und wobei das mindestens eine Schliesselement in einer bezüglich der Verschlussposition verschobenen Position die mindestens eine Luftdurchgangsöffnung freigibt.

Diese Luftdurchgangsöffnung ermöglicht ein optimal dichtes Verschliessen des Deckels. Beim Schliessen des Verschlusses, wenn der Deckel bereits mit dazwischen liegendem Dichtring auf dem Basisteil aufliegt, kann nach wie vor Luft aus dem Innenraum der Lunchbox entweichen. Dadurch wird das Verschliessen erleichtert.

Zudem kann dank dieser Luftdurchgangsöffnung bereits vor dem Anheben des Deckels heisse Luft oder Dampf austreten. Da das Schliesselement diese Öffnung freigibt, die Hände des Benützers jedoch beim Öffnen das Schliesselement festhalten, wird ein Verbrühen des Benützers optimal vermieden. Dies insbesondere dann, wenn das Schliesselement ein Bügel ist.

Liegt in der Lunchbox ein Unterdruck vor, so ermöglicht die Luftdurchgangsöffnung einen Druckausgleich vor dem vollständigen Öffnen bzw. der Entfernung des Deckels.

Vorzugsweise ist die mindestens eine Luftdurchgangsöffnung im Deckel angeordnet, wobei sie vorzugsweise vom Innenraum der Lunchbox nach aussen führt. Dadurch ist auf einfache Art und Weise eine direkte und einfach verschliessbare Verbindung von innen in die Umgebung geschaffen.

In bevorzugten Ausführungsformen weist die Lunchbox alternativ oder zusätzlich zur Luftdurchgangsöffnung mindestens ein Überdruckventil auf, das von einem Innenraum des Basisteils nach aussen führt, wobei das Überdruckventil mindestens in der Verschlussposition vom mindestens einen Schliesselement überdeckt ist. Das Überdruckventil wird vorzugsweise im Gegensatz zur Luftdurchgangsöffnung nicht dicht verschlossen, sondern lediglich überdeckt. Dadurch ist es jederzeit, d.h. auch bei vollständig geschlossener Lunchbox einsatzbereit. Es ist jedoch durch das Schliesselement geschützt und kann insbesondere beim Transport der Lunchbox nicht beschädigt oder verschmutzt werden. Des Weiteren verteilt sich austretender Dampf entlang des Schliesselements und kann somit einen Benützer, wenn er die Lunchbox in der Hand trägt, nicht durch einen konzentrierten Dampfaustritt verbrühen. Dies inbesondere dann, wenn das Schliesselement ein Bügel ist.

Vorzugsweise ist das mindestens eine Überdruckventil im Deckel angeordnet und es führt vorzugsweise von der Nahrungsmittel-Kavität nach aussen.

In bevorzugten Ausführungsformen ist das mindestens eine Schliesselement, insbesondere der Bügel, am Deckel gehalten. Der Deckel weist vorzugsweise eine Führung auf, die die Verschiebung und Schwenkung des mindestens einen Schliesselements führt. Die Führung ist vorzugsweise durch vorstehende Rippen und/oder Nuten und/oder Rampen und/oder Auskragungen gebildet.

Die Dichtung ist in Ausführungsformen verbessert und optimal gewährleistet, in denen das mindestens eine Schliesselement, insbesondere der Bügel, auf einer Auskragung oder eine Stufe des Deckels aufliegt. Durch das Aufliegen lässt sich der Deckel in der Verschlussposition dichtend auf das Basisteil drücken.

Ein einziges Schliesselement genügt, insbesondere, jedoch nicht ausschliesslich, wenn der Deckel an einer gegenüberliegenden Seite am Basisteil schwenkbar gehalten ist. Vorzugsweise weist der Verschluss jedoch zwei Schliesselemente, insbesondere zwei Bügel, auf, welche in Längsrichtung ihrer Arme bezüglich des Basisteils und des Deckels verschiebbar sind, wobei die Schliesselemente in einem zueinander geschobenen Zustand den Deckel dichtend auf dem Basisteil fixieren. Vorzugsweise sind die zwei Schliesselemente in ihrer Form und Grösse gleich ausgebildet und sie lassen sich vorzugsweise zu einer gemeinsamen Umrandung des Deckels und/oder des Basisteils zusammenschieben, so dass sie ein umlaufendes Band der Lunchbox bilden. Sie lassen sich vorzugsweise in entgegengesetzte Richtungen auseinanderziehen, so dass sie sich vorzugsweise gleichzeitig relativ zum Deckel und zum Basisteil verschieben. Auch die Schwenkung erfolgt vorzugsweise gleichzeitig oder kann, wenn manuell erzeugt, vorzugweise gleichzeitig erfolgen. Vorzugsweise heben sie dabei mit ihren einander benachbarten freien Enden den Deckel gemeinsam an, wobei ihre voneinander entfernten Stege vorzugsweise nach unten geneigt sind.

Die Verwendung von zwei Schliesselementen, insbesondere von zwei Bügeln, ermöglicht zudem ein sicheres Öffnen der Lunchbox, selbst wenn die Luchbox in der Hand gehalten wird und nicht auf einer Auflagefläche aufliegt. Dies erleichtert die Benützung beispielsweise auf einer Parkbank, beim Picknick, im Zug, im Flugzeug oder in einem anderen Beförderungsmittel.

Die Lunchbox ist in einer einfachen Ausführungsform zum Aufbewahren und zum Transport von Nahrungmitteln ausgebildet. Je nach Ausführungsform ist sie isoliert und für gekühlte und heisse Nahrungsmitteln geeignet.

In bevorzugten Ausführungsformen ist die Lunchbox zum Erwärmen, noch bevorzugter zur Zubereitung, von Nahrungsmitteln ausgebildet. In sehr bevorzugten Ausführungsformen ist sie zum Aufbewahren, zum Transport und zum Zubereiten von Nahrungsmitteln ausgebildet, wobei die Zubereitung vorzugsweise wahlweise durch reines Erhitzen oder durch Steamen, d.h. durch Dampfbeaufschlagung, erfolgt. Eine derartige Lunchbox ist beispielsweis in WO 2020/064848 A1 offenbart. Die erfindungsgemässe Lunchbox ist vorzugsweise eine Weiterentwicklung davon und weist bis auf den Verschluss und die damit wirkverbundenen Elemente vorzugsweise gleiche oder ähnliche Bauteile auf.

In einer bevorzugten Ausführungsform weist die erfindungsgemässe Lunchbox deshalb ein Heizelement zum Erwärmen und/oder Zubereiten von Nahrungsmitteln auf. Vorzugsweise weist die eine Wasserkavität zum Befüllen mit Wasser auf, wobei das Heizelement auf die Wasserkavität wirkt. Durch Erhitzen von Wasser in der Wasserkavität lässt sich das Nahrungsmittel in der Nahrungsmittel-Kavität erwärmen.

Vorzugsweise ist zwischen der Nahrungsmittel-Kavität und dem Basisteil ein Spalt ausgebildet, so dass Dampf von der Wasserkavität in die Nahrungsmittel-Kavität gelangen und das Nahrungsmittel mit Dampf beaufschlagt werden kann. Die Lunchbox wirkt somit als Steamer. Der Spalt oder Zugang lässt sich vorzugsweise vom Benützer wahlweise öffnen und schliessen.

Die wahlweise Benützung als Steamer lässt sich beispielsweise erreichen, indem der Deckel in einer ersten Drehposition derart dichtend auf dem Basisteil aufliegt, dass er den Spalt bei geschlossenem Verschluss bezüglich der Nahrungsmittel-Kavität dichtet, und wobei der Deckel in einer zweiten Drehposition derart auf dem Basisteil aufliegt, dass er den Spalt bei geschlossenem Verschluss bezüglich der Nahrungsmittel-Kavität freilässt.

Vorzugsweise ist die Nahrungsmittel-Kavität in der ersten Drehposition des Deckels bezüglich der Wasserkavität gedichtet und in der zweiten Drehposition des Deckels zwecks Dampfbeaufschlagung der Nahrungmittel mit der Wasserkavität verbunden.

In einer bevorzugten Ausführungsform weist das Basisteil eine erste und eine zweite Führung auf, wobei beim Verschieben des mindestens einen Schliesselements, insbesondere des Bügels, das mindestens eine Schliesselement in Abhängigkeit von der Drehposition des Deckels durch die erste Führung oder durch die zweite Führung des Basisteils geführt ist. Dadurch ist in beiden Drehpositionen auf einfache Art und Weise gewährleistet, dass der Deckel dicht auf dem Basisteil gehalten ist und, je nach Ausführungsform des Verschlusses, dass ein für eine genügende Dichtung gewünschter Anpressdruck vorhanden ist.

Weitere Ausführungsformen sind in den abhängigen Ansprüchen angegeben.

Die erfindungsgemässe Lunchbox weist in einer zweiten Variante der Lösung ein Basisteil mit einer Nahrungsmittels-Kavität zur Aufnahme von Nahrungsmitteln, einen das Basisteil dicht verschliessenden Deckel, einen Verschluss zum Verschliessen der Lunchbox mittels Fixierung des Deckels auf dem Basisteil und eine Luftdurchgangsöffnung und/oder ein Überdruckventil auf. Der Verschluss überdeckt in einem geschlossenen Zustand der Lunchbox die Luftdurchgangsöffnung und/oder das Überdruckventil und gibt in einem geöffneten Zustand der Lunchbox die Luftdurchgangsöffnung und/oder das Überdruckventil frei. Dadurch werden ein Austritt von Dampf und/oder eine Entlastung eines Überdrucks bereits beim Öffnen des Verschlusses ermöglicht, also bevor der Deckel vollständig geöffnet wird. Dadurch wird verhindert, dass Dampf oder Flüssigkeiten unkontrolliert entweichen können. Spritzer auf die Hand des Benützers und somit Verbrühungen, werden verhindert. Im Falle von Luftdurchgangsöffnungen ermöglicht ein sehr spätes Dichten der Öffnungen während des Schliessvorgangs ein einfaches Schliessen und einen optimal dichten Verschluss der Lunchbox.

Diese Lunchbox gemäss der zweiten Variante kann einen anders geformten Verschluss aufweisen. Es müssen nicht zwingend verschiebbar und schwenkbare Bügel sein. Beispielsweise lassen sich Bügel verwenden, wie sie in EP 1 780 140 A1 offenbart sind. Es lassen sich auch Klappen oder andere Arten von Schliesselementen verwenden. Vorzugsweise sind jedoch die hier beschriebenen verschiebbaren und schwenkbaren Bügel eingesetzt. Die oben erwähnten weiteren bevorzugten Merkmale lassen sich auch bei dieser Lunchbox verwirklichen. Die obigen Merkmale sowie die Merkmale der abhängigen Patentansprüche 2 bis 14 sind somit in diesem Text auch ohne Rückbezug auf Anspruch 1 mit den Merkmalen des Patentanspruchs 15 kombiniert und offenbart.

Vorzugsweise ist die erfindungsgsgemässe Lunchbox portabel ausgebildet.

Nachfolgend wird auf hier verwendete Begriffe verwiesen. Unter dem Begriff "Zubereitung" wird in diesem Text grundsätzlich das Erwärmen einer bereits fertigen Speise verstanden. Eine Speise lässt sich grundsätzlich durch Zuführung von Wärme erwärmen, sei es mittels reiner Wärmeübertragung und/oder mittels Zuführung von Dampf, beispielsweise Wasserdampf. Im erweiterten Sinne wird hier der Begriff "Zubereitung" auch als Kochen, auch Garen, von Nahrungsmitteln verstanden, beispielsweise das Weichkochen von Kartoffeln oder Gemüse. Einige der erfindungsgemässen Ausführungsformen ermöglichen lediglich ein Erwärmen der Speisen, andere Ausführungsformen ermöglichen zusätzlich ein Kochen bzw. Garen von Nahrungsmitteln.

Steamen, auch Dämpfen genannt, ist nicht nur aufgrund der gesundheitlichen Vorteile eine immer populärere Zubereitungsweise. Mittels eines Steamers lassen sich Speisen aufwärmen oder, bei längerer Energiezufuhr, auch Garen. Diese Art der Zubereitung wird üblicherweise Dampfgaren genannt. Der Vorteil einer Erwärmung mit einem Steamer liegt insbesondere darin, dass die Speisen nicht austrocken.

Ein dichter Verschluss ist im Sinne dieses Textes derart flüssigkeits- und gasdicht, dass er je nach Verwendungszweck der Lunchbox den Anforderungen zur Aufbewahrung, zum Transport und zur Zubereitung von Nahrungsmitteln genügt.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: eine Explosionsdarstellung einer erfindungsgemässen Lunchbox;
- Figur 2: eine perspektivische Ansicht der Lunchbox gemäss Figur 1 im geschlossenen Zustand;
- Figur 3: eine Ansicht der Lunchbox gemäss Figur 2 von vorne;
- Figur 4: eine Seitenansicht der Lunchbox gemäss Figur 2;
- Figur 5: einen Schnitt der Lunchbox gemäss Figur 3 entlang B-B;
- Figur 6: einen Schnitt der Lunchbox gemäss Figur 4 entlang C-C;
- Figur 7: eine perspektivische Darstellung der Lunchbox gemäss Figur 1 mit teilweise geöffnetem Verschluss;
- Figur 8: eine Ansicht der Lunchbox gemäss Figur 7 von vorne mit angehobenem Deckel;
- Figur 9: eine Seitenansicht der Lunchbox gemäss Figur 7;
- Figur 10: einen Schnitt der Lunchbox gemäss Figur 8 entlang B-B;
- Figur 11: einen Schnitt der Lunchbox gemäss Figur 9 entlang C-C;
- Figur 12: eine Ansicht der Lunchbox gemäss Figur 1 in einer Steamerposition;
- Figur 13: eine Seitenansicht der Lunchbox gemäss Figur 12;
- Figur 14: einen Schnitt der Lunchbox gemäss Figur 12 entlang B-B;
- Figur 15: einen Schnitt der Lunchbox gemäss Figur 13 entlang C-C;
- Figur 16: eine perspektivische Darstellung der Lunchbox gemäss Figur 1 in Steamerposition mit angehobenem Deckel;
- Figur 17: eine Explosionsdarstellung eines Deckels und eines Verschlusses der Lunchbox gemäss Figur 1;
- Figur 18: eine perspektivische Darstellung eines Basisteils der Lunchbox gemäss Figur 1;
- Figur 19: eine perspektivische Darstellung eines Details des Basisteils gemäss Figur 18;
- Figur 20: eine Ansicht des Basisteils gemäss Figur 18 von vorne;
- Figur 21: eine perspektivische Darstellung eines Bügels des Verschlusses der Lunchbox gemäss Figur 1;
- Figur 22: eine weitere perspektivische Darstellung eines Bügels gemäss Figur 21;
- Figur 23: eine perspektivische, teilweise gläserne Darstellung der Lunchbox gemäss Figur 8 mit nur einem Teil des Verschlusses und
- Figur 24: eine perspektivische Darstellung eines Details der Lunchbox gemäss Figur 23.

### BESCHREIBUNG BEVORZUGTER AUSFÜHRUNGSFORMEN

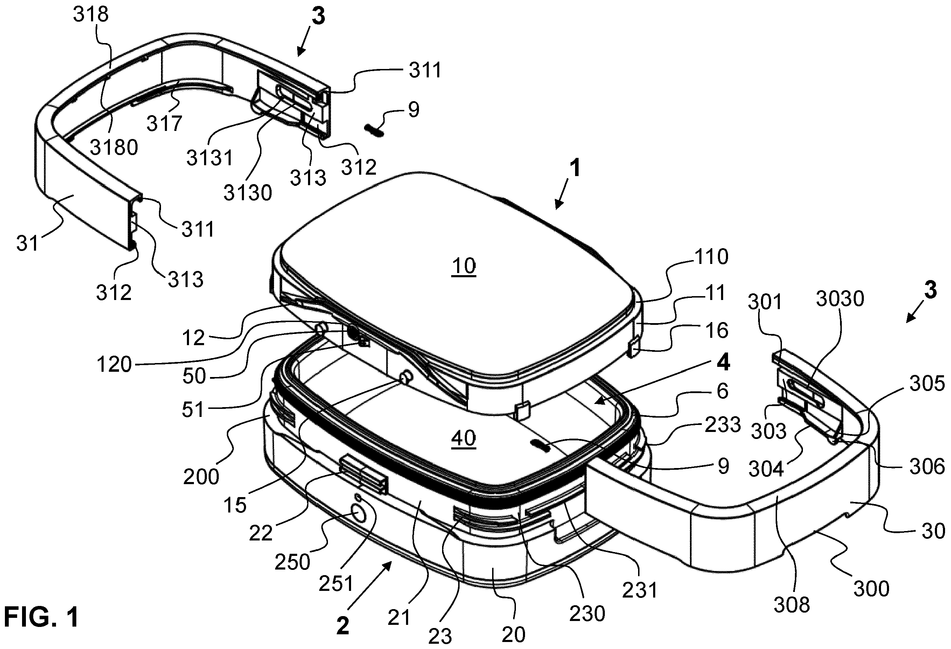

Figur 1 zeigt eine Explosionsdarstellung einer erfindungsgemässen portablen Lunchbox, welche zum Aufbewahren, zum Transport und zum Zubereiten von Nahrungsmitteln geeignet ist.

Diese Lunchbox ist eine Weiterentwicklung der Lunchbox gemäss WO 2020/064848 A1. Auch bei dieser erfindungsgemässen Lunchbox lässt sich wählen, ob die Nahrungsmittel lediglich erwärmt oder zusätzlich mit Dampf beaufschlagt werden sollen, also ob sie gesteamt werden sollen.

Die Heizeinheit, die Elektronik und die Steuerung sind bei der erfindungsgemässen Lunchbox vorzugsweise gleich ausgebildet wie in der WO 2020/064848 A1 beschrieben ist. Es ist in diesem Text explizit darauf Bezug genommen. Auch andere Teile der Lunchbox, die hier eventuell nicht ausführlich beschrieben werden, sind vorzugsweise wie in der WO 2020/064848 A1 beschrieben ausgebildet.

Die erfindungsgemässe Lunchbox gemäss den Figuren weist ein nach oben offen ausgebildetes Basisteil 2 und einen dieses Basisteil 2 verschliessenden Deckel 1 auf. Im Basisteil 2 ist eine Nahrungsmittel-Kavität 40 zur Aufnahme der Nahrungsmittel ausgebildet. Die Nahrungsmittel-Kavität 40 kann, wie hier dargestellt, aus einem einzigen Raum bestehen oder sie kann in zwei oder mehr Teilbereich unterteilt sein. Die Nahrungsmittel-Kavität 40 ist vorzugsweise durch eine Schale 4 gebildet, die in das Basisteil 2 eingelegt ist. Die Schale 4 ist vorzugsweise von Hand auf einfache Weise aus dem Basisteil 2 entfernbar, so dass die Nahrungsmittel nach Entnahme der Schale 4 direkt aus der Schale gegessen werden können.

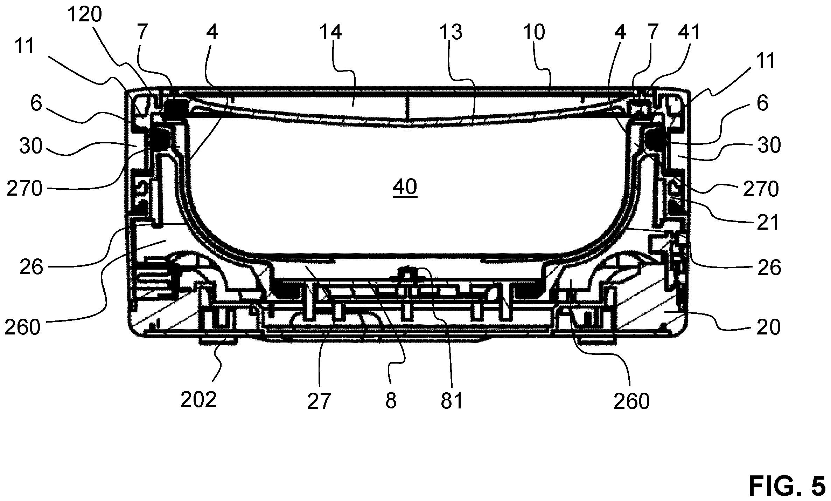

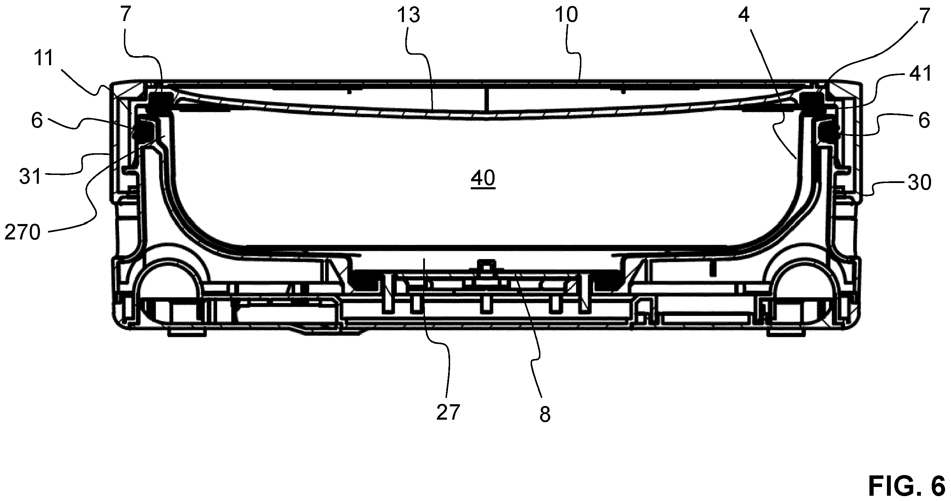

Vorzugsweise ist die Schale 4 wie in WO 2020/064848 A1 ausführlich beschrieben ausgebildet. Die Schale 4 weist vorzugsweise einen umlaufenden oberen Rand 41 auf, der einen nach aussen ragenden Flansch bildet (Figuren 5 und 6).

Das Basisteil 2 weist, wenn die Lunchbox auch zum Heizen und/oder Steamen ausgebildet ist, vorzugsweise eine Betätigungsknopf 250 und eine Funktionsanzeige 251 auf, die beispielhaft in Figur 1 dargestellt sind

Der Deckel 1 lässt sich auf das Basisteil 2 auflegen. Der Deckel 1 lässt sich vorzugsweise vollständig vom Basisteil 2 entfernen. Das Basisteil 2 ist vorzugsweise annähernd quaderförmig ausgebildet. Der Deckel 1 ist möglichst flach. Dadurch lassen sich vorzugsweise mehrere Lunchboxen übereinander stapeln.

Der Deckel 1 lässt sich mittels eines Verschlusses 3 auf dem Behälter 2 fixieren. Der Verschluss 3 weist zwei Bügel 30, 31 auf. Die Bügel 30, 31 lassen sich auch Clips nennen.

Die einzelnen Elemente des Deckels 1, des Basisteils 2 und des Verschlusses 3 werden später im Text anhand der Figur 1 und weiteren Figuren erläutert.

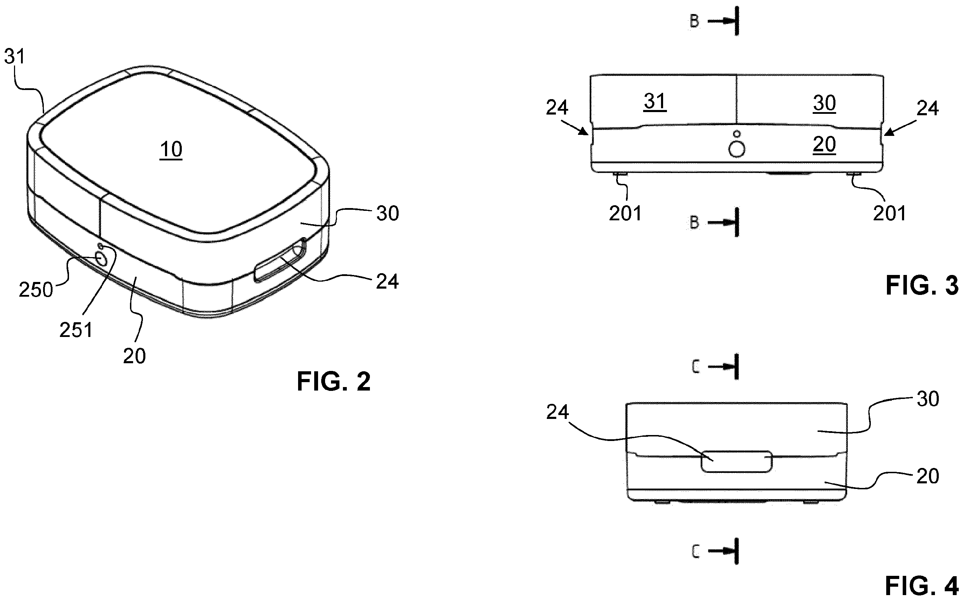

In Figur 2 ist die Lunchbox in einem ersten dicht geschlossenen Zustand dargestellt. In diesem Zustand lässt sich die Lunchbox transportieren und die Nahrungsmittel darin aufbewahren. In diesem Zustand lassen sich zudem die Nahrungsmittel, die sich in der Nahrungsmittel-Kavität befinden, auf eine gewünschte Temperatur erwärmen oder erhitzen. Die Figuren 3 und 4 zeigen die Lunchbox in demselben Zustand.

In den Figuren 5 und 6 ist der innere Aufbau der Lunchbox erkennbar. Das Basisteil 2 weist vorzugsweise eine annähernd plane Unterseite und vorzugsweise Füsse 202 auf. Dadurch ist ein sicherer Stand auf Tischoberflächen oder anderen ebenen Oberflächen gewährleistet.

Wie in Figur 1 gut erkennbar ist, weist das Basisteil 2 einen unteren Bereich 20 und einen über eine Stufe 200 nach innen versetzten oberen Bereich 21 auf. Die zwei Bereiche 20, 21 sind vorzugsweise gemeinsam einstückig ausgebildet.

in den Figuren 5 und 6 ist gut erkennbar, dass das Basisteil 2 vorzugsweise eine Doppelwandung aufweist, wobei ein Zwischenraum zwischen dem äusseren Gehäuse und einer inneren Wand 26 vorzugsweise hohl ausgebildet ist. Diese Kammer weist in den Figuren das Bezugszeichen 260 auf. Die innere Wand 26 bildet einen Aufnahmebereich für die Schale 4 aus. Die Schale 4 liegt vorzugsweise in ihrem unteren Bereich auf im Basisteil 2 angeordneten, hier nicht sichtbaren Rippen auf. Ihr oberer Rand 41 endet vorzugsweise beabstandet zum oberen Rand des Basisteils 2. Die Schale 4 verläuft beabstandet zur inneren Wand 26, so dass zwischen der inneren Wand 26 und der Schale 4 ein Freiraum 270 ausgebildet ist.

Das Basisteil 2 bildet unter der Schale 4 einen Hohlraum aus, welcher als Wasser-Kavität 27 dient. Diese Wasser-Kavität 27 lässt sich mit Wasser befüllen, wenn die Schale 4 aus dem Basisteil 2 entnommen worden ist. Je nach Ausführungsform lässt sie sich auch mit eingesetzter Schale 4 befüllen.

Die Wasser-Kavität 27, auch Heizkavität genannt, ist nach unten durch einen inneren Boden geschlossen, der eine Elektronik- und Heizeinheit 8 aufweist. Diese Anordnung ist vorzugsweise gleich oder ähnlich ausgebildet wie in WO 2020/064848 A1 und wird deshalb hier nicht mehr im Detail besprochen. Sie weist mindestens ein Heizelement, eine Steuerungseinheit und vorzugsweise mindestens einen Temperatursensor 81 auf, wobei der Temperatursensor 81 vorzugsweise in die Wasser-kavität 27 hineinragt. Er dient zur Überprüfung der Wassertemperatur in der Wasser-kavität 27. Er liefert seine Messwerte an die Steuerungseinheit, welche das mindestens Heizelement entsprechend steuert.

Der Deckel 1 kann einstückig ausgebildet sein. Vorzugsweise weist er einen Rahmen 11 auf, in welchen eine Deckplatte 10 eingelegt ist. Die Deckplatte 10 ist vorzugsweise mindestens auf ihrer oberen Aussenseite plan ausgebildet.

Unterhalb der Deckplatte 10 bildet der Rahmen 11 eine vorzugsweise nach unten gebogene Wand 13 aus. Der Zwischenraum zwischen der Deckplatte 10 und der gebogenen Wand 13 bildet eine Kammer 14, die beispielsweise hohl ist. Alternativ ist sie mit einem Isolationsmaterial oder einem Isoliergas gefüllt oder sie ist evakuiert.

Der Rahmen 11 weist eine horizontal verlaufende, umlaufende Stufe 110 auf. Dies ist in der Figur 1 gut erkennbar. Auf der Aussenseite jeder der zwei längeren Seitenwände des Rahmens 11 ist eine vorstehende Rampe 12 angeformt. Die Rampen 12 sind spiegelsymmetrisch bezüglich eines mittleren horizontal verlaufenden Bereichs ausgebildet. Sie bilden somit eine ansteigenden und einen abfallenden Rampenbereich aus. Der mittlere horizontal verlaufende Bereich bildet eine Nut 120 aus. Die Rampe 12 ist in Figur 1 gut erkennbar, die Nut 120 in Figur 5.

Wie in Figur 1 erkennbar ist, sind unterhalb der Rampe 12 zwei vorstehende Noppen 15 am Rahmen 11 angeordnet. Vorzugsweise sind sie wie die Rampen 12 einstückig mit dem Rahmen 11 ausgebildet.

Ferner sind an den kürzeren Seiten des Rahmens 11 auf jeder Seite je zwei nach aussen und nach unten vorstehende Distanzhalter 16 angeordnet bzw. angeformt. Die Distanzhalter 16 auf der ersten Seite sind nicht an derselben Stelle platziert wie die Distanzhalter 16 auf der gegenüberliegenden zweiten Seite.

Das Basisteil 2 weist in seinem oberen Bereich 21 seitlich vorstehende Führungsrippen 22, 23 auf. Erste Führungsrippen 22 befinden sich mittig auf der längeren Seite. Zweite Führungsrippen befinden sich im abgerundeten Übergang zwischen den längeren und den kürzeren Seien. Die ersten und zweiten Führungsrippen 22, 23 bilden jeweils zwei Führungskanäle aus, deren Verwendung später noch beschrieben wird.

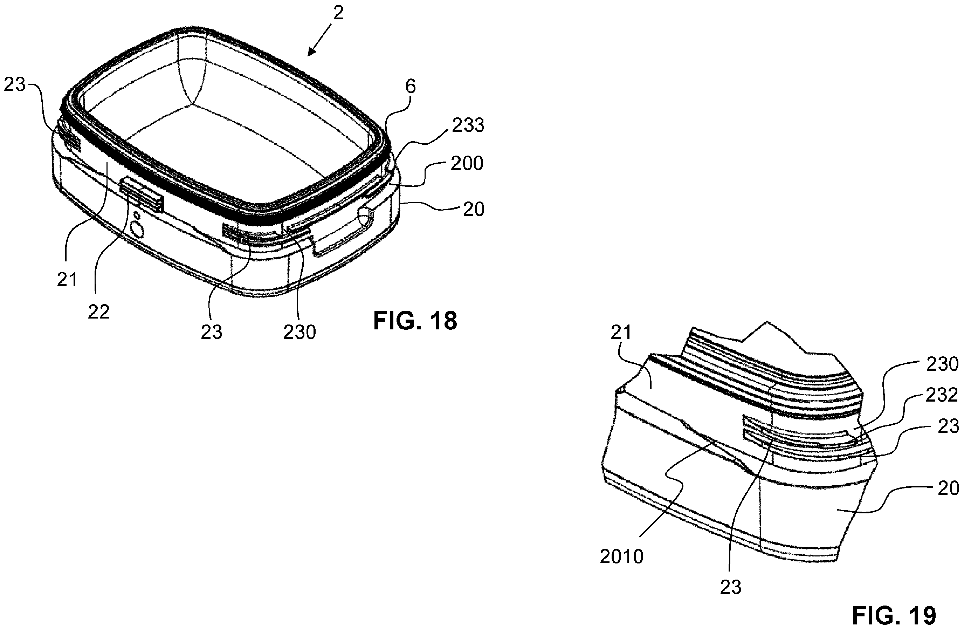

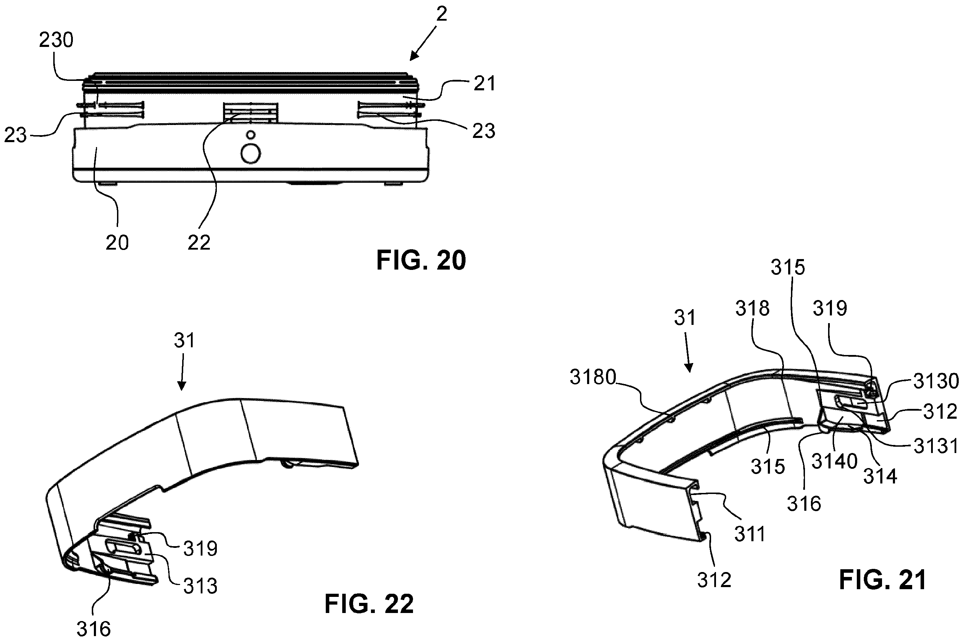

Die zweiten Führungsrippen 23 weisen im oberen Bereich 21 in ihren oberen Kanälen jeweils einen Unterbruch 230 auf. Die Unterbrüche 230 auf einer Seite sind an einer anderen Stelle als die Unterbrüche 230 auf der anderen Seite angeordnet. Dies ist beispielsweise in den Figuren 18 bis 20 gut erkennbar.

Der Deckel 1 lässt sich in zwei Drehpositionen auf das Basisteil 2 aufsetzen. In einer ersten Drehposition greifen die Distanzhalter 16 in die Unterbrüche 230 ein. Der Rahmen 11 des Deckels 1 liegt mit seinem unteren umlaufenden Rand auf dem mittleren oberen Rand 231 der zweiten Führungsrippen 23 auf. Dies ist in Figur 6 gut erkennbar.

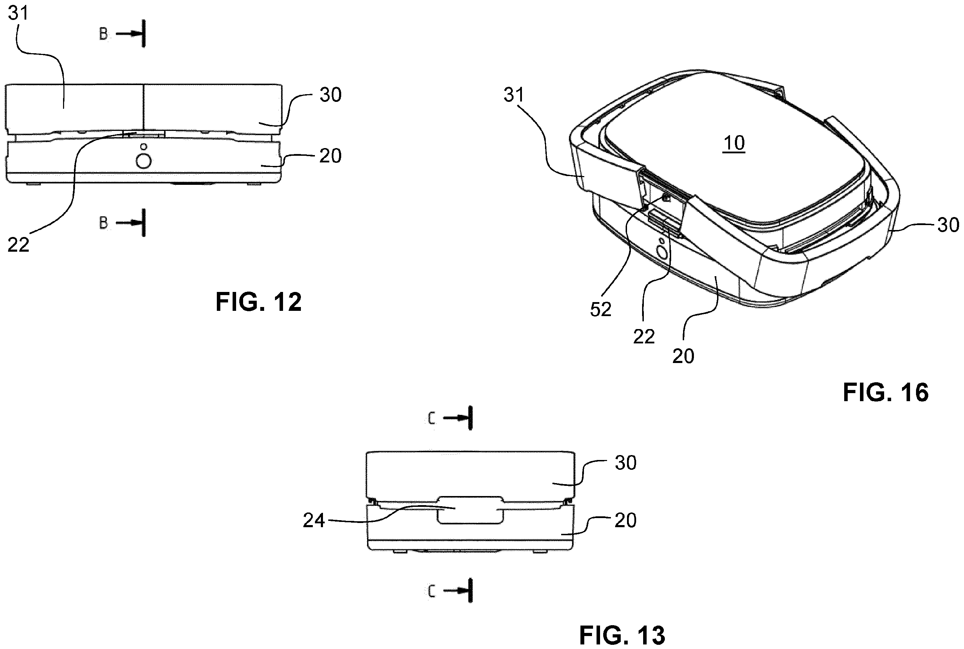

Wird der Deckel um 180° gedreht, können die Distanzhalter 16 aufgrund der unterschiedlichen Anordnung nicht mehr in die Unterbrüche 230 eingreifen. Sie stehen benachbart dazu auf dem oberen Rand der zweiten Führungsrippen 23 auf. Vorzugsweise ist der obere Rand in diesem Bereich 232 etwas breiter ausgebildet als der übrige obere Rand der zweiten Führungsrippe 23. Diese breitere Ausführung ist in Figur 19 gut erkennbar. In dieser zweiten Drehposition des Deckels 1 endet der untere Rand des Rahmens 11 beabstandet zum oberen Rand der Führungsrippen 22, 23. Der Deckel 1 ist somit höher angeordnet als in der ersten Drehposition und die dadurch im Innern der Lunchbox gebildeten Kammer ist deshalb grösser. Dies ist in den Figuren 12 bis 15 dargestellt.

In anderen Ausführungsformen lassen sich die Unterbrüche 230 und die Distanzhalter 16 zusätzlich oder alternativ auch an den längeren Seiten des Basisteils 2 bzw. des Deckels 1 ausbilden. In weiteren Ausführungsformen sind ein Teil der Unterbrüche oder alle Unterbrüche im Deckel angeordnet und ein Teil der Distanzhalter oder alle Distanzhalter im Basisteil.

Auf der Aussenseite des Basisteils 2 ist eine umlaufende erste Dichtung 6 angeordnet, hier in Form eines Dichtrings. Im Deckel 1 ist eine nach unten gerichtete, umlaufende zweite Dichtung 7, hier ebenfalls in Form eines Dichtrings, angeordnet. Wie in den Figuren 5 und 6 erkennbar ist, dichtet die erste Dichtung 6 gegenüber der inneren umlaufenden Seitenwand des Rahmens 11. Dies gilt nicht nur für die in den Figuren 5 und 6 dargestellte erste Drehposition des Deckels 1, sondern auch für die zweite Drehposition, die in den Figuren 12 bis 15 dargestellt ist.

Die zweite Dichtung 7 liegt in der ersten Drehposition des Deckels 1 auf dem oberen Rand 41 der Schale 4 dichtend auf. Dadurch ist eine gedichtete Trennung zwischen der Nahrungsmittel-Kavität 40 und dem Freiraum 270 sowie der Wasser-Kavität 27 vorhanden. In diesem Zustand dient die Lunchbox zur Erwärmung bzw. zum Erhitzen der Nahrungsmittel ohne Zugabe von Dampf sowie zum Transport und der Lagerung. Dies ist in den Figuren 5 und 6 gut erkennbar.

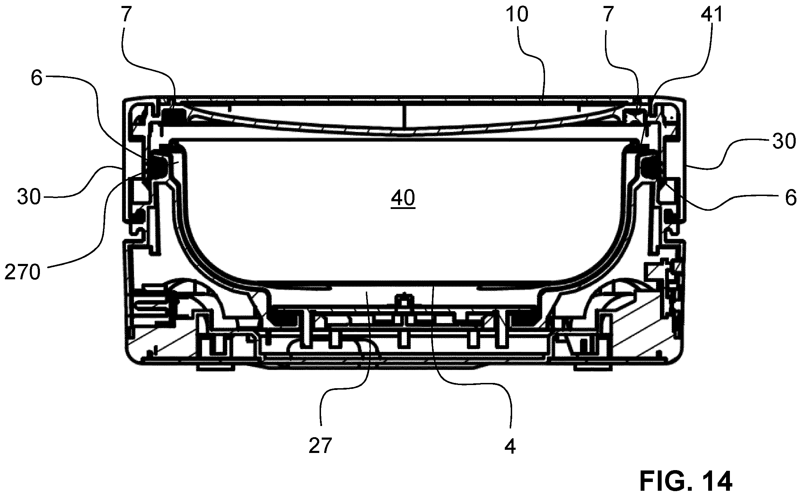

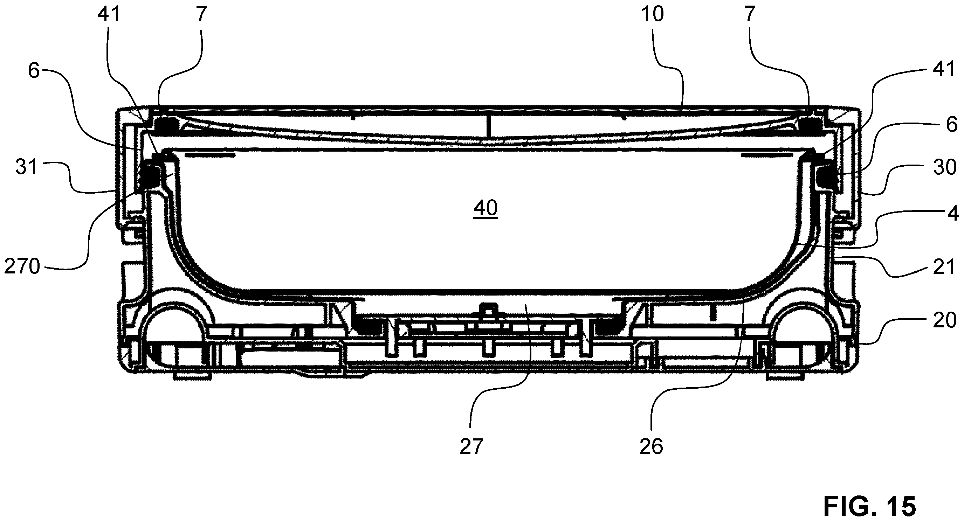

In der zweiten Drehposition des Deckels 1 endet die zweite Dichtung 7 beabstandet zum oberen Rand 41 der Schale 4. Dies ist in den Figuren 14 und 15 erkennbar. Eine offene Verbindung zwischen Wasser-Kavität 40 und Nahrungsmittel-Kavität 27 ist über den Freiraum 270 geschaffen. In diesem zweiten, nach wie vor nach aussen dicht verschlossenen Zustand dient die Lunchbox nicht nur zur Erwärmung der Nahrungsmittel, sondern auch zur Dampfbeaufschlagung, d.h. zum Steamen.

Durch einfaches Drehen des Deckels 1 kann der Benutzer somit wählen, ob er die Nahrungsmittel durch Erwärmen bzw. Erhitzen zubereiten will oder ob er sie steamen will. Die erste Drehposition des Deckels 1 dient zudem zum Aufbewahren und zum Transport, da in diesem Fall die Schale 4 gegenüber dem übrigen Innenraum der Lunchbox gedichtet ist.

Die Drehposition lässt sich auf dem Deckel beschriften, so dass der Benutzer die Stellung einfach erkennt. Dies ist jedoch nicht zwingend notwendig. Wie durch Vergleich der Figuren 3 und 12 erkennbar ist, erkennt der Benutzer auch durch die Distanz der Bügel 30, 31 vom Basisteil 2, d.h. durch den vorhandenen oder nicht vorhandenen, horizontal umlaufenden Spalt, in welcher Position und somit in welcher Betriebsbereitschaft sich die Lunchbox befindet.

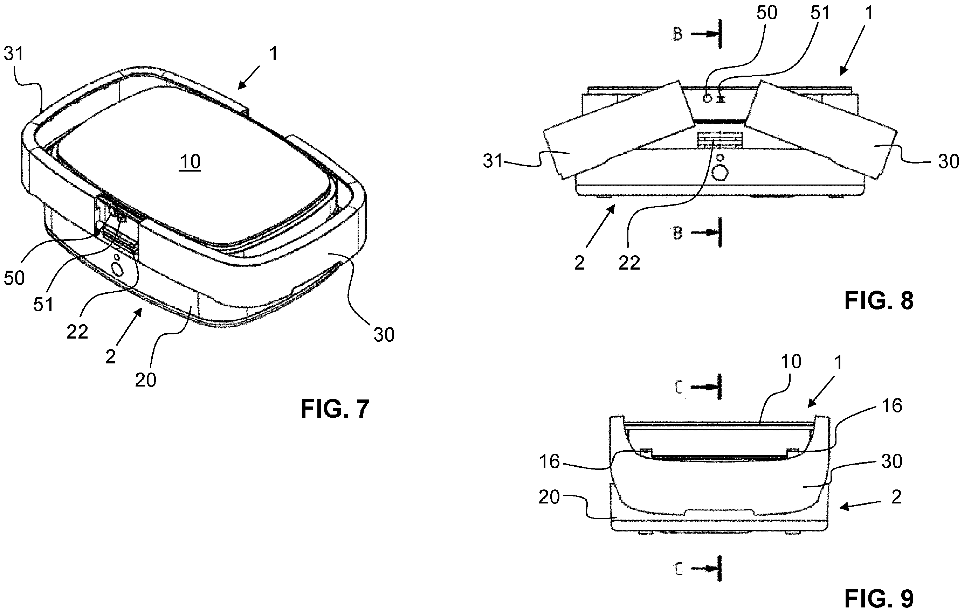

In Figur 7 ist die erfindungsgemässe Lunchbox in ihrer ersten Drehposition und in teilweise geöffnetem Zustand dargestellt. Zum Öffnen werden die zwei Bügel 30, 31 in horizontale, zueinander entgegengesetzte Richtungen gezogen. Damit sich die Bügel 30, 31 gut von Hand ergreifen lassen, ist eine Nische 24 im Basisteil 2 und eine Ausnehmung 300, 310 in den Bügel vorhanden. Dies ist in den Figuren 1 und 2 erkennbar.

Werden die Bügel 30, 31 noch weiter herausgezogen, so erreichen sie eine Stelle, an der sie sich durch leichten manuellen Druck nach unten kippen lassen. In anderen Ausführungsformen kippen sie selbsttätig durch ihr Eigengewicht nach unten. Dies ist in den Figuren 8 und 9 erkennbar. In Figur 16 ist dieselbe Situation dargestellt, wobei sich hier der Deckel 1 in der zweiten Drehposition befindet.

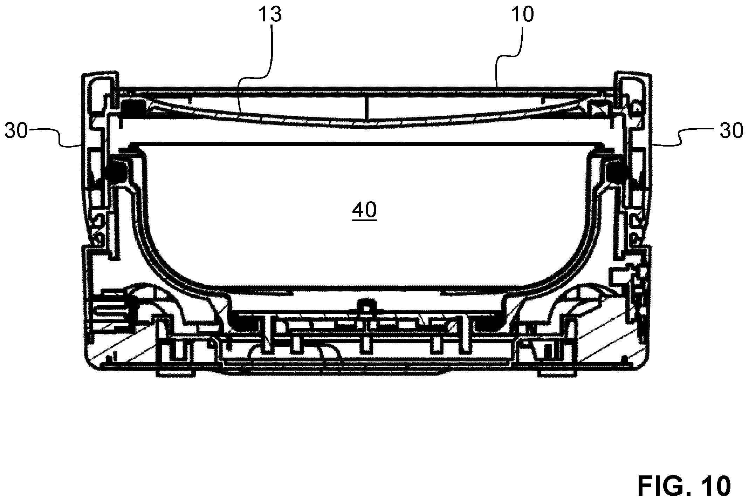

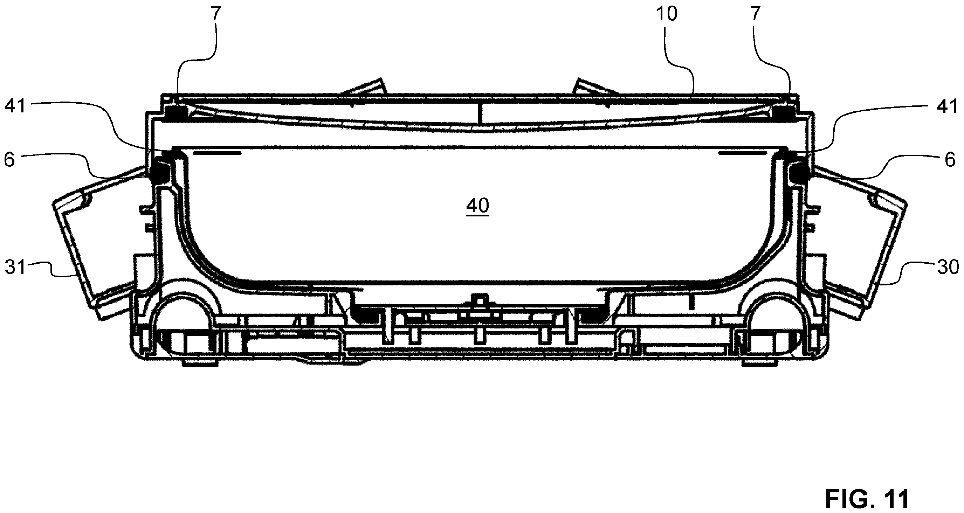

Wie in den Figuren 10 und 11 dargestellt ist, wird der Deckel 1 aufgrund dieses Herunterklappens der Bügel 30, 31 angehoben. Die Bügel 30, 31 verbleiben dank ihres Eigengewichts in dieser Position. Der Deckel 1 verbleibt dank Anliegen an oder Aufliegen auf der Dichtung in der angehobenen Stellung. Der Benutzer kann nun zu einem ihm passenden Zeitpunkt den Deckel 1 anheben und die Nahrungsmittel-Kavität mit den zubereiteten Speisen freilegen. Der Deckel 1 lässt sich vorzugsweise vollständig vom Basisteil 2 entfernen und die Schale 4 lässt sich anschliessend aus dem Basisteil 2 herausheben. Dasselbe gilt für die Lunchbox, wenn sich der Deckel 1 in der zweiten Drehposition befindet, wie dies in Figur 16 dargestellt ist.

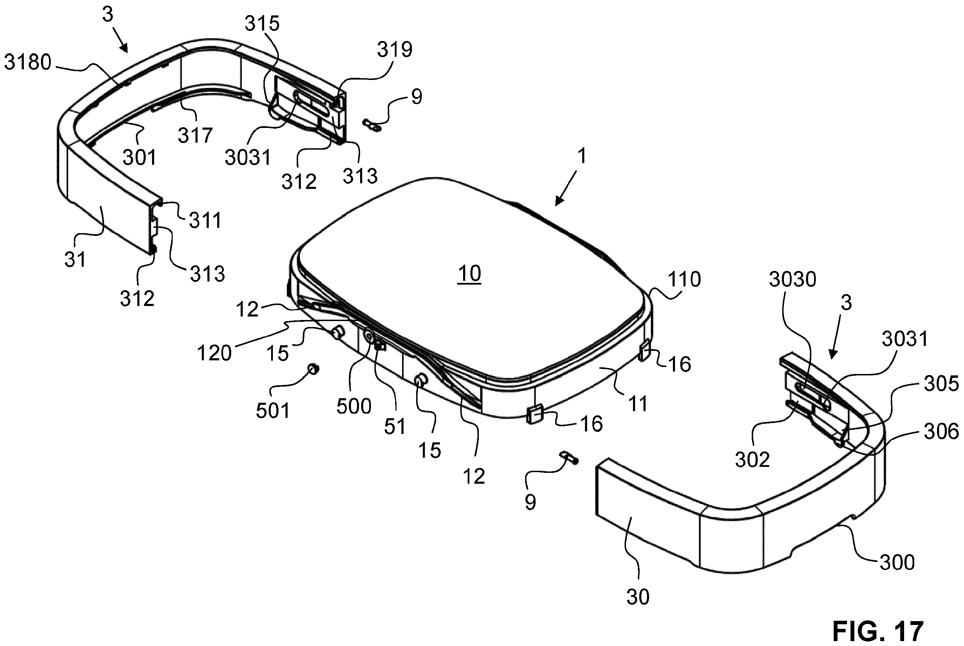

Wie in Figur 1 dargestellt ist, weist der Deckel 1 im mittleren Bereich einer seiner längeren Seitenwände zwei Öffnungen auf. Eine der Öffnung ist ein einfaches Durchgangsloch in das Innere der Lunchbox und dient als Luftautrittsöffnung 51. Die andere Öffnung ist mit einem Überdruckventil 50 versehen. Das Überdruckventil 50 weist einen in Figur 17 sichtbaren Ventilsitz 500 und eine Ventilmembran 501 auf. Vorzugsweise ist das Überdruckventil 50 ein einfaches Membran-Schirmventil. Andere Ventilarten lassen sich jedoch auch verwenden. Die Luftdurchgangsöffnung 51 ist in diesem Beispiel auf einem am Deckel 1 angeformten Keil angeordnet, wobei die die Luftdurchgangsöffnung 51 aufweisende Fläche einer Stirnseite des ersten Bügels 30 zugewandt ist. Im ersten Bügel 30 ist eine Dichtung 9, hier in Form eines weichen Stopfens, angeordnet. Der zweite Bügel 31 weist ebenfalls eine Dichtung 9 auf, vorzugsweise ist diese gleich ausgebildet. Sie befindet sich jedoch auf der gegenüberliegenden Längsseite in Bezug zum Deckel 1. Dies ist in den Figur 1, 17, 21 und 22 erkennbar. Auf der gegenüberliegenden Längsseite des Deckels 1 ist ein weiterer Keil mit einer Luftdurchgangsöffnung 51 vorhanden, wobei diese Öffnung dem zweiten Bügel 31 zugewandt ist. Auf dieser gegenüberliegenden Seite ist in diesem Beispiel kein Überdruckventil 50 vorhanden. Diese gegenüberliegende Seite ist in Figur 16 sichtbar. Alternativ lassen sich mehr als zwei Luftdurchgangsöffnungen 51 ausbilden. Andere Ausführungsformen weisen nur eine einzige Luftdurchgangsöffnung 51 auf. Des Weiteren kann kein Überdruckventil 50 oder mehr als ein Überdruckventil 50 vorhanden sein. Wenn mehr als ein Überdruckventil 50 vorhanden ist, können sie bei gleichem Überdruck öffnen oder in anderen Ausführungsformen öffnen sie bei unterschiedlichem Überdruck, d.h. gestuft.

Beim Schliessen der Bügel 30, 31 werden die Luftdurchgangsöffnungen 51 vorzugsweise erst kurz vor dem vollständigen Verschluss gedichtet. Dadurch kann während des Schliessvorgangs Luft aus dem Innenraum der Lunchbox entweichen. Das Verschliessen wird dadurch erleichtert.

Wie in den Figuren 7, 8 und 16 erkennbar ist, werden die Luftdurchgangsöffnungen 51 beim Verschieben der Bügel 30, 31 freigegeben. Im geschlossenen Zustand liegen die an den Bügeln 30, 31 gehaltenen Dichtungen 9 an den Luftdurchgangsöffnungen 51 dichtend an. Durch die Freigabe dieser Luftdurchgangsöffnung 51 kann nun Dampf und heisse Luft aus dem Innenraum der Lunchbox austreten. Dies bereits beim horizontalen Verschieben der Bügel 30, 31 gemäss Figur 7 und erst recht, wenn der Deckel 1 bei heruntergeklappten Bügeln 30, 31 gemäss dem Figuren 8 und 16 in der angehobenen, jedoch nach wie vor geschlossenen Position gehalten wird. Die Luftdurchgangsöffnungen 51 befinden sich beabstandet zum Bereich des Bügels 30, 31, der vom Benutzer zum Betätigen in die Hand genommen werden muss. Dadurch ist das Risiko, dass sich der Benutzer verbrüht, minimiert. Auch in der Nähe befindliche Personen oder Tiere werden kaum mit Dampf oder heisser Luft besprüht, da der Deckel 1 nicht sofort angehoben wird, sondern der Überdruck zuerst durch die Luftdurchgangsöffnungen 51 entweichen kann.

Somit kann bei herausgezogenen Bügeln oder bei heruntergeklappten Bügeln 30, 31 gewartet werden, bis kein Dampf oder kaum mehr Dampf aus den Luftdurchgangsöffnungen 51 austritt, bevor der Deckel 1 vom Basisteil 2 entfernt und die Nahrungsmittel-Kavität 40 freigelegt wird.

Das Überdruckventil 50 ist jederzeit einsatzbereit, also auch im geschlossenen Zustand der Lunchbox, wenn die Bügel 30, 31 zusammengeschoben sind und sich vorzugsweise berühren, wie dies in Figur 2 dargestellt ist. Die verdeckte Anordnung des Überdruckventils hat den Vorteil, dass der Dampf bei geschlossener Lunchbox und zusammengeschobenen Bügeln 30, 31 zuerst in die Bügel 30, 31 gelangt und sich so verteilt nach aussen bewegt. Ein Verbrühen ist dadurch nicht möglich.

Nachfolgend wird anhand dieses Ausführungsbeispiels beschrieben, wie das Verschieben und Herunterklappen der Bügel 30, 31 ermöglicht wird und wie eine erhöhte Dichtung der Lunchbox sichergestellt ist. Diese Funktionen und Eigenschaften lassen sich auch einzeln erzielen, so dass auch Ausführungsformen von der Beschreibung mitumfasst sind, die nicht alle nachfolgend erwähnten Merkmale aufweisen, sondern lediglich diejenigen Merkmale, welche zum Erfüllen der jeweiligen Funktion oder Eigenschaft notwendig sind. Zudem lassen sich derartige Funktionen und Eigenschaften auch mit anderen Mitteln erzielen, die sich dem Fachmann aus seinem Fachwissen ergeben. Auch dies ist in der Beschreibung mitumfasst.

In den Figuren 1, 17, 21 und 22 sind die Bügel 30, 31 gut erkennbar. Nachfolgend sind die Merkmale des zweiten Bügels 31 beschrieben und deren Bezugszeichen genannt. Der erste Bügel 30 ist vorzugsweise in Form und Grösse gleich ausgebildet. Somit ist die in diesem Text angegebene Beschreibung des zweiten Bügels 31 auch auf den ersten Bügel 30 anzuwenden und anstelle der Bezugszeichen 31x sind die Bezugszeichen 30x zu verwenden, mit x eine Zahl von 1 bis 9. Dasselbe gilt für die vierstelligen Bezugsziffern.

Der zweite Bügel 31 ist u-förmig ausgebildet. Er weist zwei Schenkel und einen diesen verbindenden Steg auf. Die Schenkel und der Steg weisen bis auf die Ausnehmung vorzugsweise dieselbe Höhe auf, die zudem vorzugsweise annähernd gleichbleibend ist.

Die Oberseite des Bügels 31 weist einen nach innen ragenden Flansch 318 auf. Dieser ist im Bereich der frei liegenden Enden der Schenkel u-förmig nach unten gebogen, so dass eine nach unten offene u-förmige Nut ausgebildet ist. Diese Nut dient als obere Führung 311. Im Bereich des Stegs weist der Flansch 318 mindestens eine Rippe, vorzugsweise mehrere nach unten gerichtete Rippen auf, die als Niederhalter 3180 dienen. Der Flansch 318 liegt im geschlossenen Zustand der Lunchbox auf der Stufe 11 des Deckels 1 auf. Die Niederhalter 3180 drücken den Deckel 1 dadurch nach unten zum Basisteil 2 hin. Die Oberseite der zwei Bügel 30, 31 und des Deckels 1 bilden vorzugsweise eine plane Fläche, wie die in Figur 2 dargestellt ist.

Auf der Innenseite der zwei Schenkel jedes Bügels 30, 31 ist unterhalb der oberen Führung 301, 311 ein nach innen vorstehender Einrastblock 303, 313 ausgebildet. Er weist ein Führungsfenster 3030, 3130 mit einer Einführungserweiterung 3031, 3131 auf. Beim Zusammensetzen der Lunchbox werden die zwei Bügel 30, 31 parallel zum Deckel 1 zusammengeschoben, bis die Noppen 15 des Deckels 1 in die Einführungserweiterung 3031, 3131 eingreifen und in das etwas schmalere Führungsfenster 3030, 3130 eingreifen.

Oberhalb des Einrastblocks 303, 313 ist eine Aufnahme 309, 319 zur Befestigung der bereits erwähnten Dichtung 9 angeordnet (siehe Figuren 17, 21 und 22). Die Dichtung 9 ist vorzugsweise stabförmig oder knopfförmig ausgebildet.

Unterhalb des Einrastblocks 303, 313 ist im Bereich der freien Enden der Schenkel der Bügel 30, 31 eine untere Führung 302, 312 ausgebildet. Diese weist ebenfalls die Form einer nach oben offenen u-förmigen Nut auf. Den unteren Führungen 302, 312 folgt eine erweiterte annähernd horizontal verlaufende Platte 304, 314 nach, die über eine Schrägfläche in einer Rückwand 305, 315 endet. Im Bereich der Schrägfläche ist eine nach unten ragende Nase 306, 316 ausgebildet. Die Innenwand der Schenkel im Bereich der Platte 304, 314 bildet einen nach innen vorstehenden Bereich 3040, 3140 aus. Im unteren Bereich des Stegs der Bügel 30, 31 verläuft ein nach innen ragender Steg, der eine hintere Führung 307, 317 bildet.

Die untere Führung 302, 312 greift in die ersten Führungsrippen 22 des Basisteils 2 ein. Je nach Drehposition des Deckels 1 relativ zum Basisteil 2 gleitet die untere Führung 302, 312 entlang der oberen oder der unteren Rippe der ersten Führungsrippen 22. In der Steamposition mit leicht angehobenem Deckel 1 steht sie mit der oberen ersten Führungsrippe 22 in Verbindung, in der Heiz-, Transport und Aufbewahrungsposition mit der unteren ersten Führungsrippe 22. Entsprechend wirken die hinteren Führungen 307, 317 mit den zweiten Führungsrippen 23 zusammen. Auch hier ist ein Zusammenwirken entweder mit der oberen oder der unteren Rippe der zweiten Führungsrippen 23 vorhanden. Dies lässt sich aus Figur 1 entnehmen. Die nicht vollständig dargestellten Seiten des Basisteils 2 weisen ebenfalls entsprechende erste bzw. zweite Führungsrippen 22, 23 auf.

Die Nut 120 des Deckels 1 wirkt beim Schliessen der Bügel 30, 31, d.h. beim Zusammenschieben, mit der oberen Führung 301, 311 zusammen. Die zwei Nuten 120, 301, 311 greifen ineinander.

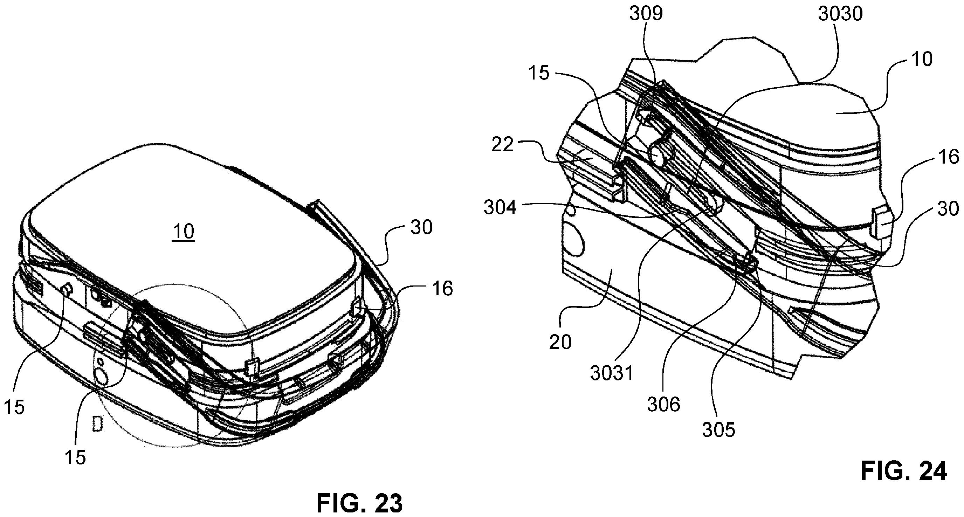

In den Figuren 23 und 24 ist die Situation mit nach unten geschwenkten Bügeln 30, 31 dargestellt, wie sie beim Öffnen zum Entweichen des Dampfes oder zum Abkühlen der erhitzten Nahrungsmittel entsteht. Sie sind hier in der Öffnungsposition dargestellt. Die Schwenkbarkeit ist je nach Ausführungsform auch bereits in einer zur Verschlussposition verschobenen Position, die noch nicht die Öffnungsposition ist, möglich.

Die Noppen 15 befinden sich am jeweils vordersten Ende des Führungsfensters 3030, 3130. Dieses bildet somit einen Anschlag. Der Bügel 30, 31 lässt sich nicht weiter auseinanderziehen. Vorzugsweise liegt dabei die vorderste untere Kante des Bügels auf den ersten Führungsrippen 22 auf. Dies erleichtert ein späteres Zusammenschieben der Bügel 30, 31.

Die Stufe 200 weist eine vertikale Schrägfläche 2010 auf, die sich in Richtung zu den ersten Führungsrippen 22 hin von einer Aussenkante der Stufe 200 zur Aussenwand des oberen Bereichs 21 hin neigt.

Beim Schliessen der Bügel 30, 31 gleitet die Nase 306, 316 entlang dieser Schrägfläche 2010. Dadurch wird sichergestellt, dass der Bügel 30, 31 nicht nach aussen gedrückt wird, sondern dass sich die obere Führung 301, 311 wieder in gewünschter Art und Weise in die obere Nut 120 der Rampe 12 des Deckels 1 einfügt. Durch das Drücken des Bügels 30, 31 nach unten gleitet der Bügel 30, 31 seitlich vom Basisteil 2 weg. Der Bügel 30, 31 würde somit nicht mehr auf dem Basisteil 2 aufliegen. Dank der Nase 306, 316 und einer Vertiefung wird dies verhindert.

Der Einrastblock 303, 313 und/oder der verdickte, vorstehende Bereich 3040, 3140 der Platte 304, 314 drücken bei geschlossener Lunchbox zudem die Seitenwände des Deckels 1 nach innen und erhöhen so die Dichtheit. Beim Schliessen der Bügel 30, 31 bildet das vordere Ende der Platte 304, 314 und/oder der verdickte Bereich 3040, 3140 einen Anschlag für die Stirnseite der ersten Führungsrippen 22.

In anderen Ausführungsformen ist die Schwenkbarkeit und/oder die Führung beim Schliessen der Bügel und/oder ein Andrücken des Deckels zur Sicherstellung der Dichtheit auf eine sich dem Fachmann naheliegend ergebene Art und Weise gelöst, die beispielsweise aus dem Stand der Technik bekannt ist.

Die zweiten Führungsrippen 23 weisen vorzugsweise an ihren freien Enden je einen Haken 233 auf, welcher in die hintere Führung 307, 317 leicht einrastet und somit die Bügel 30, 31 in der geschlossenen Position hält. In anderen Ausführungsformen sind andere Fixierungsmittel vorhanden oder die Bügel 30, 31 sind danke der Reibungskräfte in ihrer Position gehalten. Dies ist in den Figuren 1 und 18 erkennbar.

Die Ausbildung der Noppen 15 und der Führungsfenster 3030, 3130 verhindern, dass die Bügel 30, 31 beim Schwenken oder beim Herausziehen vom Deckel 1 entfernt werden können. Die Entfernung ist vorzugsweise nur möglich, wenn die zwei Bügel 30, 31 zueinander geschoben sind, d.h. die Bügel einen geschlossenen Verschluss bilden.

Die erfindungsgemässe Lunchbox ermöglicht ein sicheres Öffnen des Deckels ohne Verbrühungsgefahr für den Benützer und mit geringem Kraftaufwand. Zudem ermöglicht sie eine optimale Dichtung.

**BEZUGSZEICHENLISTE**

| | | | |
|---|---|---|---|
| 1 | Deckel | 300 | Ausnehmung |
| 10 | Deckplatte | 301 | obere Führung |
| 11 | Rahmen | 302 | untere Führung |
| 110 | Stufe | 303 | Einrastblock |
| 12 | Rampe | 3030 | Führungsfenster |
| 120 | Nut | 3031 | Einführerweiterung |
| 13 | gebogene Wand | 304 | Platte |
| 14 | Kammer | 3040 | vorstehender Bereich |
| 15 | Noppe | 305 | Rückwand |
| 16 | Distanzhalter | 306 | Nase |
| | | 307 | hintere Führung |
| 2 | Basisteil | 308 | Flansch |
| 20 | unterer Bereich | 3080 | Niederhalter |
| 200 | Stufe | 309 | Aufnahme |
| 2010 | Schrägfläche | | |
| 202 | Fuss | 31 | zweiter Bügel |
| 21 | oberer Bereich | 310 | Ausnehmung |
| 22 | erste Führungsrippen | 311 | obere Führung |
| 23 | zweite Führungsrippen | 312 | untere Führung |
| 230 | Unterbruch | 313 | Einrastblock |
| 231 | mittlerer oberer Rand | 3130 | Führungsfenster |
| 232 | erweiterter Bereich | 3131 | Einführerweiterung |
| 233 | Haken | 314 | Platte |
| 24 | Nische | 3140 | vorstehender Bereich |
| 250 | Betätigungsknopf | 315 | Rückwand |
| 251 | Anzeige | 316 | Nase |
| 26 | innere Wand | 317 | hintere Führung |
| 260 | Kammer | 318 | Flansch |
| 27 | Wasser-Kavität | 3180 | Niederhalter |
| 270 | Freiraum | 319 | Aufnahme |
| | | | |
| | | 4 | Schale |
| 3 | Verschluss | 40 | Nahrungsmittel-Kavität |
| 30 | erster Bügel | 41 | oberer Rand |
| | | 7 | zweite Dichtung |
| 50 | Überdruckventil | | |
| 500 | Ventilsitz | 8 | Elektronik- und Heizeinheit |
| 501 | Ventilmembran | 81 | Temperatursensor |
| 51 | Luftdurchgangsöffnung | | |
| | | 9 | Dichtung |
| 6 | erste Dichtung | | |

## Patentansprüche

1. Lunchbox, aufweisend
- ein Basisteil (2) mit einer Nahrungsmittels-Kavität (40) zur Aufnahme von Nahrungsmitteln,
- einen das Basisteil (2) dicht verschliessenden Deckel (1) und
- einen Verschluss (3) zum Verschliessen der Lunchbox mittels Fixierung des Deckels (1) auf dem Basisteil (2),
wobei der Verschluss (3) mindestens ein Schliesselement (30, 31) aufweist, das bezüglich des Basisteils (2) und des Deckels (1) aus einer Verschlussposition in eine Öffnungsposition verschiebbar ist,
**dadurch gekennzeichnet,**
**dass** mindestens ein Anhebungselement vorhanden ist, welches in einer bezüglich der Verschlussposition verschobenen Position des Schliesselements den Deckel (1) vom Basisteil (2) anhebt.

2. Lunchbox nach Anspruch 1, wobei das mindestens eine Schliesselement (30, 31) einen Bügel (30, 31) mit zwei Armen und einem die zwei Arme verbindenden Steg umfasst,
wobei der Bügel (30, 31) in Längsrichtung der Arme bezüglich des Basisteils (2) und des Deckels (1) aus der Verschlussposition in die Öffnungsposition verschiebbar ist,
wobei das mindestens eine Anhebungselement der Bügel (30, 31) ist und wobei der Bügel (30, 31) in der bezüglich der Verschlussposition verschobenen Position schwenkbar ist, wobei eine Schwenkung des Bügels (30, 31) bezüglich des Basisteils (2) und des Deckels (1) den Deckel (1) vom Basisteil (2) anhebt.

3. Lunchbox nach Anspruch 2, wobei der Verschluss (3) zwei Bügel (30, 31) aufweist, welche in Längsrichtung ihrer Arme bezüglich des Basisteils (2) und des Deckels (1) verschiebbar sind, wobei die Bügel (30, 31) in einem zueinander geschobenen Zustand den Deckel (1) dichtend auf dem Basisteil (2) fixieren.

4. Lunchbox nach einem der Ansprüche 1 bis 3, wobei die Lunchbox mindestens eine Luftdurchgangsöffnung (51) aufweist, die von einem Innenraum des Basisteils (2) nach aussen führt, wobei das mindestens eine Schliesselement (30, 31) in der Verschlussposition die mindestens eine Luftdurchgangsöffnung (51) dicht verschliesst und wobei das mindestens eine Schliesselement (30, 31) in einer bezüglich der Verschlussposition verschobenen Position die mindestens eine Luftdurchgangsöffnung (51) freigibt.

5. Lunchbox nach Anspruch 4, wobei die mindestens eine Luftdurchgangsöffnung (51) im Deckel (1) angeordnet ist und wobei sie von der Nahrungsmittel-Kavität (40) nach aussen führt.

6. Lunchbox nach einem der Ansprüche 1 bis 5, wobei die Lunchbox mindestens ein Überdruckventil (50) aufweist, das von einem Innenraum des Basisteils (2) nach aussen führt, wobei das Überdruckventil mindestens in der Verschlussposition vom mindestens einen Schliesselement (30, 31) überdeckt ist.

7. Lunchbox nach Anspruch 6, wobei das mindestens eine Überdruckventil (50) im Deckel (1) angeordnet ist und wobei es von der Nahrungsmittel-Kavität (40) nach aussen führt.

8. Lunchbox nach einem der Ansprüche 1 bis 7, wobei das mindestens eine Schliesselement (30, 31) am Deckel (1) gehalten ist und wobei der Deckel (1) eine Führung (120, 12, 15) aufweist, die die Verschiebung des Schliesselements und eine Bewegung, insbesondere eine Schwenkung des mindestens einen Anhebungselements (30, 31) führt.

9. Lunchbox nach einem der Ansprüche 1 bis 8, wobei das mindestens eine Schliesselement (30, 31) auf einer Auskragung oder einer Stufe (110) des Deckels (1) aufliegt um den Deckel (1) in der Verschlussposition dichtend auf das Basisteil (2) zu drücken.

10. Lunchbox nach einem der Ansprüche 1 bis 9, wobei die Lunchbox ein Heizelement zum Erwärmen und/oder Zubereiten von Nahrungsmitteln aufweist.

11. Lunchbox nach Anspruch 10, wobei die Lunchbox eine Wasserkavität (27) zum Befüllen mit Wasser aufweist und wobei das Heizelement auf die Wasserkavität (27) wirkt.

12. Lunchbox nach einem der Ansprüche 1 bis 11, wobei zwischen Nahrungsmittel-Kavität (40) und Basisteil (2) ein Spalt ausgebildet ist, wobei der Deckel (1) in einer ersten Drehposition derart dichtend auf dem Basisteil (2) aufliegt, dass er den Spalt bei geschlossenem Verschluss (3) bezüglich der Nahrungsmittel-Kavität (40) dichtet, und wobei der Deckel (1) in einer zweiten Drehposition derart auf dem Basisteil (2) aufliegt, dass er den Spalt bei geschlossenem Verschluss (3) bezüglich der Nahrungsmittel-Kavität (40) freilässt.

13. Lunchbox nach den Ansprüchen 11 und 12, wobei die Nahrungsmittel-Kavität (40) in der ersten Drehposition des Deckels (1) bezüglich der Wasserkavität (27) gedichtet ist und wobei die Nahrungsmittel-Kavität (40) in der zweiten Drehposition des Deckels (1) zwecks Dampfbeaufschlagung der Nahrungmittel mit der Wasserkavität (27) verbunden ist.

14. Lunchbox nach einem der Ansprüche 12 oder 13, wobei das Basisteil (2) eine erste und eine zweite Führung (22, 23) aufweist und wobei beim Verschieben des mindestens einen Schliesselements (30, 31) das mindestens eine Schliesselement (30, 31) in Abhängigkeit von der Drehposition des Deckels (1) durch die erste Führung (22, 23) oder durch die zweite Führung (22, 23) des Basisteils (2) geführt ist.

15. Lunchbox, aufweisend
- ein Basisteil (2) mit einer Nahrungsmittels-Kavität (40) zur Aufnahme von Nahrungsmitteln,
- einen das Basisteil (2) dicht verschliessenden Deckel (1),
- einen Verschluss (3) zum Verschliessen der Lunchbox mittels Fixierung des Deckels (1) auf dem Basisteil (2),
- eine Luftdurchgangsöffnung (51) und/oder ein Überdruckventil (50),
**dadurch gekennzeichnet,**
**dass** der Verschluss (3) in einem geschlossenen Zustand der Lunchbox die Luftdurchgangsöffnung (51) und/oder das Überdruckventil (50) überdeckt und in einem geöffneten Zustand der Lunchbox die Luftdurchgangsöffnung (51) und/oder das Überdruckventil (50) freigibt.
